# EUROPEAN PATENT APPLICATION

(11) **EP 3 144 207 A1**
(43) Date of publication of application: **22.03.2017**
(21) Application number: 15185359.5
(22) Date of filing: 15.09.2015
(51) Int. Cl.: B62D 15/02, G08G 1/14

(54) **AUTOMATIC PARKING SYSTEM FOR A VEHICLE**

(71) Applicant: Panasonic Automotive Systems Europe GmbH, 63225 Langen (DE)
(72) Inventor: GHOSH, Lali, 63225 Langen (DE)
(74) Representative: Grünecker Patent- und Rechtsanwälte PartG mbB

(57) **Abstract**

The present invention provides a parking electronic control unit for a vehicle and a respective method that are capable of performing an automated judgment as to whether a potential parking slot is eligible for parking the vehicle for an individual driver. The judgment is based on a joint evaluation of sensor data regarding the potential parking slot received from sensors the vehicle is equipped with and personalized data of a driver profile that is pre-stored and retrieved for the evaluation. Thereby, in addition to the objective suitability of the parking slot for parking the vehicle, personal criteria and preferences of an individual driver can also be taken into account for identifying/selecting an eligible parking slot.

## Description

### FIELD OF THE INVENTION

The present invention relates to an automatic or semi-automatic parking system for a vehicle. More specifically, the present invention relates to a parking electronic control unit (ECU) capable of deciding the eligibility of a parking slot for parking the vehicle therein.

### BACKGROUND ART

Currently, parking assistance systems for vehicles are available for a variety of types of vehicles. Such parking systems provide the functionality of parking a vehicle into a predetermined parking slot, after having been activated by the driver. Guidance of the vehicle into the parking slot is based on a permanent evaluation process of sensor output data, in particular distance sensors measuring the distance between the vehicle and obstacles, during the parking process. The parking process itself is controlled by an electronic steering system with which the vehicle is equipped. The automatic parking system determines a suitable trajectory for parking the vehicle upon a driver's start command and then steers the vehicle along said trajectory.

The parking process in existing automatic parking systems can be performed both semi-automatically (semi-autonomously) and automatically (autonomously). Semi-automatically means that the driver retains certain functions under his control, in particular, for instance, speed control. On the other hand, also completely automatic control is possible. This means that after giving a start command, no further interference from the side of the driver is necessary until completion of the parking process. In this case, it is, in particular, also possible that the driver leaves the vehicle before the parking process starts, and gives the start command from outside by means of a remote control device.

In addition to the actual parking process, parking assistance systems may also be equipped to perform the process for finding/determining a suitable parking slot. For instance, in a multi-storey car park or a large parking site having a plurality of individual parking slots ("parking lot"), it may be necessary to determine a suitable one out of the plurality of parking slots. For this purpose, upon receiving the respective parking command, the vehicle may be automatically guided through the parking lot, in order to determine a suitable parking slot, and then perform the parking process into the determined parking slot. This may be performed completely automatically when the respective suitable parking slot has been reached, or the vehicle may stop close to the determined parking slot and await further instructions from the driver in order to perform the actual parking process. Suitability of the parking slot for parking the vehicle may be determined in accordance with the size of the parking slot in particular, i.e. whether or not a parking slot is large enough for the particular car to be parked therein. This is determined based on the sensing result of a plurality of sensors, which may, inter alia, include cameras.

However, there may be further criteria which determine that a particular parking slot is not suitable or not eligible for parking a vehicle therein. For instance, bike lanes, or special areas where children might be playing are often marked on the roads. In such areas, parking is of course not possible. In addition, certain parking slots are reserved for handicapped people or women with children etc. In such cases, either special road markings for these slots are placed on the asphalt, such as a wheelchair symbol, or a respective traffic sign is placed in front of the slot.

In systems currently available on the market, it depends heavily on the driver to judge whether a parking slot is eligible for his or her particular car to park. It is the driver's responsibility to interrupt the parking maneuver/action when he/she perceives the parking slot not to be eligible for the car. In other words, it is up to the driver to break a once-started parking action when he or she perceives the action to be incorrect. Bike lanes and special designated areas are marked on the street, but the automatic control unit of the vehicle for parking is not given such information.

In order to improve the automatic parking of a car in the parking slots, it is therefore necessary to identify such specially marked slots and feed the respective information to the parking ECU. The decision on whether to park the particular vehicle in a particular parking slot can thereby be optimized and made more reliable by further reducing any necessary interference by the driver. This may speed up the overall parking process, in particular by making the decision to find a parking slot faster.

For providing the respective information to the parking ECU, in particular camera systems may be used that are currently already available as part of the equipment of a variety of cars, such as surround view/top view system/rear view system of forward-looking cars. Said cameras may take the images of road markings or traffic signs such as images of a wheelchair, a person with a stroller, children playing etc. and this information would then be fed to the parking ECU of the vehicle, in order to process the captured images and identify them as to their meaning. Based thereon, the automatically parking/driving car can decide whether a selected parking slot is indeed eligible. Also, if the information becomes available only after an automatic parking process has already been started, the parking ECU can decide whether to go ahead with the maneuver or to break the parking process.

The following situation provides a specific example of the above: the surround view/rear view camera captures the image of the parking slot after the autonomous/semi-autonomous parking mode has been activated. The car starts maneuvering in the identified parking area. A wheelchair symbol will be detected by one of the cameras and a warning will be sent to the driver that the parking slot is reserved for handicapped people. The parking maneuver can then be interrupted manually or automatically.

However, it is a drawback of such systems that any decision suggested or automatically made does not reflect the individual wish or preference of a particular driver. In the specific example given above, wherein the camera of a vehicle detects a wheelchair symbol after a parking process has been started, there are, in principle, two possibilities which are not appropriately evaluated by the system: either the individual driver (or a further occupant of the vehicle) is entitled to use a parking slot reserved for handicapped people or not. As described above, in such a case it would simply be decided what would be appropriate in the majority of cases, i.e. that the individual parking slot is not eligible. Either only a respective signal is output so that a driver must nevertheless interfere by interrupting the parking process manually. Or, in the case of an automatic interruption, an individual driver who is entitled to use the parking slot must also interfere, in order to re-initiate the parking process.

Individual preferences or wishes of car drivers are not limited to the specific example given above. A plurality of further driver individual preferences are possible. For instance, some drivers want the car to be parked in well lit areas. Respective information can also be captured by the camera. Another example concerns the desire of women drivers to use only those parking slots which are available in some areas that are specifically designated for women. On the other hand, such parking slots are exclusively for women drivers and therefore not eligible for male drivers.

### SUMMARY OF THE INVENTION

The present invention aims to provide an improved parking electronic control unit for a vehicle, which is capable of automating the driver's individual decision about the eligibility of a parking slot for parking the vehicle, a respective method and a vehicle including said parking electronic control unit.

This is achieved by the features of the independent claims.

According to a first aspect of the present invention, an automated method, performed by a parking electronic control unit of a vehicle, is provided. The method comprises the steps of receiving a driver's instruction to start a parking process of the vehicle, receiving sensor information related to a potential parking slot located close to a current position of the vehicle, from at least one sensor device with which the vehicle is equipped, and retrieving, from a storage storing therein a driver profile of said driver, personalized data belonging to said driver profile. The method further comprises the steps of performing a joint evaluation of said received sensor information and said retrieved personalized data and of judging whether or not the potential parking slot is eligible for the driver to park the vehicle, based on said joint evaluation.

According to a second aspect of the present invention, a parking electronic control unit for a vehicle for controlling an autonomous or semi-autonomous parking process of the vehicle is provided. Said parking electronic control unit comprises a first receiving module for receiving a driver's instruction to start a parking process of the vehicle, a second receiving module for receiving sensor information related to a potential parking slot located close to a current position of the vehicle, from at least one sensor device with which the vehicle is equipped, and a data retrieving module for retrieving, from a storage storing therein a driver profile of said driver, personalized data belonging to said driver profile. The parking electronic control unit further comprises an evaluation module for performing a joint evaluation of said received sensor information and said retrieved personalized data and a judging module for judging whether or not the potential parking slot is eligible for the driver to park the vehicle, based on said joint evaluation.

In accordance with a further particular aspect of the present invention, a vehicle comprising a parking electronic control unit according to the second aspect is provided.

It is the particular approach of the present invention that an electronic control unit (parking ECU) is capable of performing a joint evaluation of sensor data obtained from sensors with which the vehicle is equipped and of pre-stored driver profile data. The decision as to whether a potential parking slot is eligible for parking the vehicle is made based on said joint evaluation. Thereby, the parking slot eligible for both the particular vehicle and the individual driver can be found automatically and faster than by conventional automatic parking systems. Hence, an instructed parking process can be automatically fulfilled completely, reliably and correctly.

Although the electronic control unit is specifically designated as a "parking electronic control unit" (parking ECU) in this specification, this does not necessarily mean that the unit must be specifically designated only for automatic parking. Any ECU capable of performing the functionality of the present invention as defined in the appended claims can be used as the parking ECU of the present invention. For instance, the parking ECU can be a general vehicle's ECU, which is, *inter alia,* capable of performing the inventive approach.

Sensors with which the vehicle is equipped may include but are not limited to a camera or a system of cameras. Besides capturing images of the parking slot, including in particular the road surface of the parking slot as well as any objects surrounding the parking slot, such a camera can also provide brightness information about the parking slot, if so desired. Also, the sensors may include an individual illuminance meter.

The driver profile is stored in a storage and includes personalized data of an individual driver related to the selection of a parking site. Said data include, in particular, the driver's preferences or demands regarding certain parameters of a parking slot being eligible for him or her. In the joint evaluation, it is determined whether parameters of a potential parking slot determined by the sensors match the driver's demands or are in contradiction therewith. The storage shall include at least one driver profile, but as a rule, it stores a plurality of individual driver profiles belonging to a plurality of individual drivers that regularly use to drive the car. An individual driver activates the driver profile that is associated with him or her out of the plurality of driver profiles when he or she is driving the car. The storage for storing the driver profile data may be included in the parking ECU. Alternatively, a storage module outside the parking ECU can be used which may be connected to the parking ECU, for instance, by the vehicle bus. Also, it is possible that the driver profile data are provided on an attachable and detachable storage means such as an SD (Secure Digital) card or a USB (Universal Serial Bus) memory stick that can be attached to the parking ECU or the vehicle bus. In that case, the driver may normally carry the individual profile data himself or herself and activate the respective profile for the vehicle by inserting the attachable storage means in a respective slot when using the vehicle. Such an embodiment may, for instance, be advantageous in the case of a pool of vehicles that is regularly used by a plurality of drivers without having a fixed association between drivers and vehicles, such as a car pool belonging to a firm.

Preferably, if it is judged that the potential parking slot is not eligible, a signal indicating that the potential parking slot is not eligible is output. The signal may be output as an optical indication or an acoustic warning to the driver in order to inform him or her that the parking slot is not eligible for parking. Also preferably, the parking ECU can automatically decide not to start the parking process despite the driver's instruction if the potential parking slot is judged to be not eligible.

Also preferably, in the alternative case that it is judged that the potential parking slot is eligible, an autonomous or semi-autonomous parking process is started. More preferably, the step of receiving sensor information is repeated for receiving updated sensor information, after the parking process has been started. Thereby, updated sensor information can be obtained. On the basis of the updated sensor information, the joint evaluation and the judgment of eligibility of the parking slots are repeated on the basis of the updated sensor information. The started parking process is then automatically interrupted if the repeated judging step judges, based on the updated sensor information and the personalized data that a potential parking slot is not eligible. Such an embodiment takes care of a situation wherein, for instance, a traffic sign or a road marking indicating that a potential parking slot is not eligible for parking at all, or is eligible for parking only under conditions that contradict the settings in the driver profile, is recognized only during the started parking process (for instance, when being approached by a camera on the vehicle).

According to preferred embodiments, the received sensor information includes traffic sign information and/or road marking recognition information, brightness information of the location of the potential parking slot etc.

Also according to preferred embodiments, the personalized data include criteria for determining whether or not to select the potential parking slot as a parking slot, i.e. whether or not the potential parking slot is eligible, in accordance with the driver's predetermined personal preferences or needs.

In accordance with a specific preferred embodiment, the personalized data include a minimum brightness level required by the driver who selects a potential parking slot. The joint evaluation then includes comparing the minimum brightness level with brightness data of the location of the potential parking slot included in the received sensor information. If the brightness data of the sensor information indicates that the brightness is below the threshold, the parking slot is judged to be ineligible. If the brightness data indicates a brightness above the threshold, the parking slot is judged to be eligible (if there are no other conditions contradicting the eligibility).

In accordance with another specific embodiment, the personalized data include information defining whether or not the driver accepts a potential parking slot having a certain road marking or traffic sign. The joint evaluation then includes determining whether the received sensor information indicates the presence of the particular road marking or traffic sign at the potential parking slot. For instance, a decision as to whether a potential parking slot specifically marked as reserved for handicapped people is eligible can then be individually taken, depending on whether or not the driver's profile data includes information that this particular driver is entitled to use a parking slot reserved for handicapped people.

The present invention is, however, not limited to the particular examples given above. For instance, the two specific embodiments described above can be combined. Namely, the driver profile data of a (woman) driver may define that a potential parking slot is acceptable only if it is a parking slot specifically reserved for women or has a minimum brightness. In that case, besides specific women-only parking slots, only those which according to the sensed brightness data have the required minimum brightness are considered eligible.

Generally, the method according to the present invention can be performed by the parking ECU of the vehicle for a predetermined potential parking slot when the driver stops in front of or near the parking slot and activates automatic parking by giving the instruction to start the parking process. As indicated above, the driver may either remain seated in the vehicle during parking, or may leave the vehicle before the automatic parking process starts, and give the instruction via some remote control means. For instance, the remote control means can be integrated in the ignition key of a car.

However, in compliance with further preferred embodiments, another situation is possible as well, wherein automatic parking is instructed at a certain position such as the entrance of a large parking site (parking lot), before a potential parking slot has been individually selected.

In accordance with a preferred embodiment, the vehicle is controlled to be automatically guided through a parking site having a plurality of potential parking slots, in order to look for and identify an eligible parking slot.

More preferably, the first eligible parking slot that is passed by the vehicle while it is being automatically guided is selected for parking the vehicle.

Alternatively preferably, location information of each potential parking slot passed by while the vehicle is being automatically guided is temporarily stored in a suitable memory of the parking ECU (or a memory that is accessible to the parking ECU) and plural eligible parking slots are evaluated against each other in order to determine a parking slot that best matches predetermined criteria included in the personalized data. The best matching parking slot is then recommended to the driver, and/or the vehicle is automatically guided to the best matching parking slot, and the parking process is started at the location of said parking slot.

Further features and advantages of the present invention are set forth in dependent claims.

### BRIEF DESCRIPTION OF THE DRAWINGS

Additional features and advantages of the present invention will become apparent in the following and more particular description as illustrated in the accompanying drawings, wherein:
Fig. 1 illustrates an overview of a parking electronic control unit according to an embodiment of the present invention;
Fig. 2 illustrates the overall operation of an automated method according to an embodiment of the present invention;
Fig. 3 is a flowchart illustrating the operation of a method in accordance with an embodiment of the present invention;
Fig. 4 is a flowchart illustrating the operation of a method in accordance with another embodiment of the present invention; and
Fig. 5 is a flowchart illustrating the operation of a method in accordance with yet another embodiment of the present invention.

### DETAILED DESCRIPTION

The present invention provides a parking ECU for a vehicle which is capable of personalizing the selection of an eligible parking slot, by performing a joint evaluation of selection criteria set forth in driver profile data retrieved from the storage and of sensor information related to a potential parking slot obtained from the sensors on a vehicle.

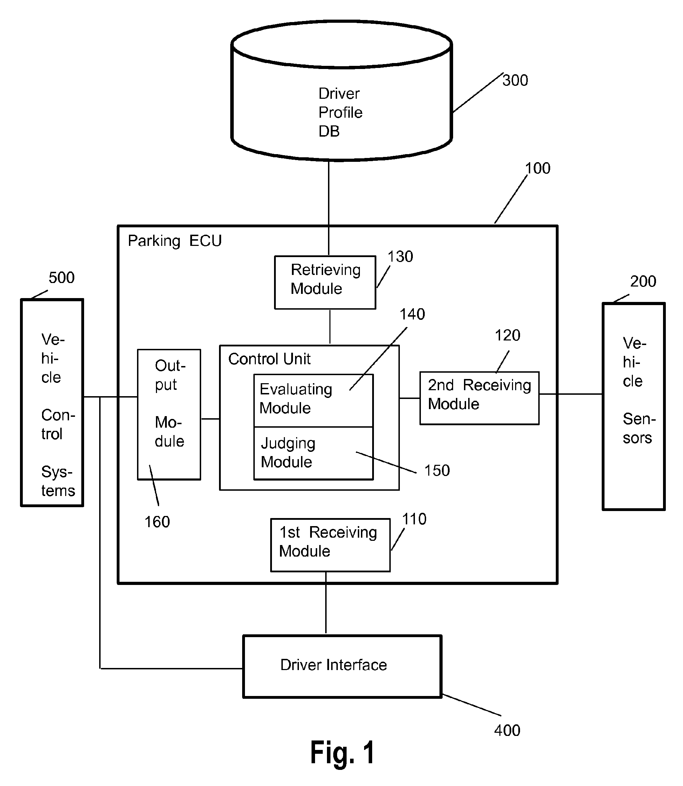

Fig. 1 provides an overall overview of a parking ECU 100 in accordance with an embodiment of the present invention, together with the peripheral connections thereof.

Parking ECU 100 comprises a first and a second receiving module, 110 and 120, respectively, a retrieving module 130, an evaluation module 140, a judging module 150 and an output module 160. Any modules of the parking ECU 100 illustrated in the drawing can be implemented by means of software modules or hardware modules or a combination thereof.

The first receiving module 110 is connected to an interface 400 for receiving the driver's instruction to start a parking process of the vehicle. The driver interface 400 may be internal to the vehicle, such as comprising a particular button on the dashboard to be pressed for instructing the parking process. The driver interface 400 may also include a wireless component, enabling a driver to perform the instruction by means of a remote control via any appropriate wireless technology a skilled person is aware of at the date of the present application or emerging in the future, such as infrared, radiofrequency (RF) or Bluetooth technology. In particular, a remote control means can be included in the ignition key of the vehicle. Thereby, the driver can initiate and automate the parking process already having left the vehicle, which may be advantageous, for instance, in case of space limitations where it may be difficult for the driver to leave the vehicle when it is placed in the parking slot.

The second receiving module 120 is connected to one or a plurality of vehicle sensors 200 for receiving sensor information from the sensors. The connection may be performed via a bus of the vehicle and may include an interface component (not shown).

The retrieving module 130 is connected to driver profile database 300. As shown in the illustrated embodiment, driver profile database 300 can be implemented in a storage means outside the actual parking ECU 100. Alternatively, driver profile database 300 can also form an integrated part of the parking ECU itself. For implementing the present invention, driver profile database 300 shall include at least the personalized data of a single driver profile, i.e. belonging to a single particular driver. In accordance with preferred embodiments, a plurality of driver profiles belonging to a plurality of drivers can be stored in the driver profile database 300 at the same time. In that case, each individual driver using the vehicle has to select his or her driver profile to be applied before performing a method in accordance with the present invention. Also, driver profile database 300 can be implemented in the form of an attachable and detachable memory means. In such a case, the driver profile database 300 is preferably provided individually for each potential driver. It includes only a single driver profile belonging to said driver and is normally kept with the driver for being attached to an appropriate connection slot of a vehicle used by said driver. The personalized data of the driver profile selected by the driver or made available by the driver through inserting an exchangeable driver profile storage is retrieved by the retrieving module 130 so as to be made available to the parking ECU 100.

The evaluation module 140 is internally connected at least to the second receiving module 120 and the retrieving module 130 and performs a joint evaluation of the sensor information received from the vehicle sensors 200 through the second receiving module 120 and the personalized data included in the driver profile, retrieved from the driver profile database 300 through the retrieving module 130. The joint evaluation includes, in particular, a determination as to whether personalized criteria defined in the personalized data are met by a potential parking slot, based on the sensor information.

The judging module 150 receives a result of the joint evaluation from evaluation module 140 and performs the judgment as to whether or not a potential parking slot for which sensor information has been received is eligible or not for the driver to park the vehicle. For instance, if the personalized data do not include any information about whether the individual driver is entitled to use a parking site for handicapped people, but the sensor information indicates a potential parking site as a parking site for handicapped people, it is concluded that the criterion determining that the driver must not use a parking slot reserved for handicapped persons is not met and therefore the parking slot is judged to be not eligible for parking of a vehicle driven by said driver. Also, if the personalized data include a certain (minimum) brightness at the location of the parking slot as a criterion for the eligibility of the parking slot, and the actual brightness in a parking slot measured by the sensors is lower than said minimum brightness, it is concluded that the brightness criterion of the driver profile is not met. The parking slot is therefore judged to be not eligible for parking a vehicle driven by said driver.

Although, in the present drawing, the evaluating module and a judging module have been illustrated as two separated but closely connected sub-units of an overall central control unit (such as a CPU), they may also be provided separately from the central control unit of the parking ECU. Also, evaluating module 140 and judging module 150 can be integrated into a single evaluating and judging module, which may be a software module running on the CPU.

Output module 160 is coupled at least to the judging module 150 and outputs a judging result indicating whether the currently evaluated potential parking slot is eligible for parking or not. The respective signal is output to vehicle control systems 500 for automatically controlling at least a parking process (steering, driving and breaking) of the vehicle, in order to either initiate or stall or interrupt an automated parking process, depending on the outcome of the judgment. Further, output module 160 may also be connected to driver interface 400 in order to provide the driver with information about the outcome of the judgment in a form which is perceivable by the driver, i.e. a visual or acoustic indication.

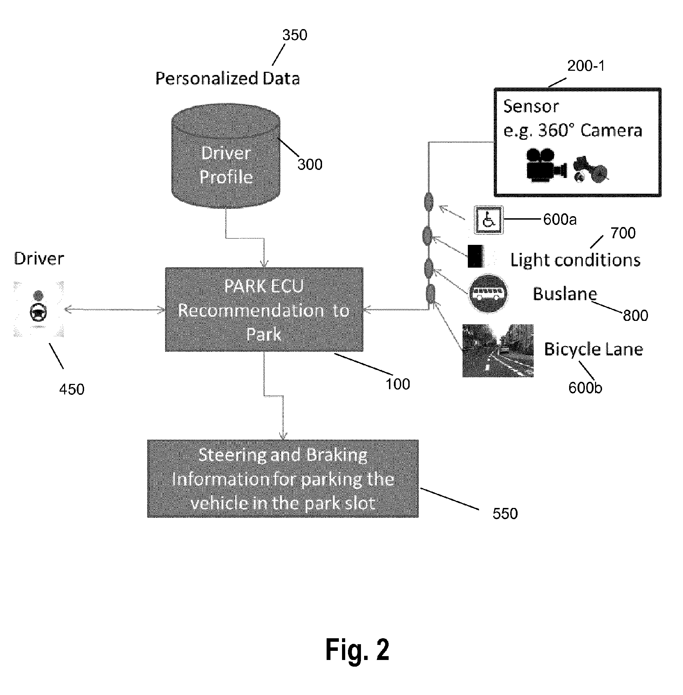

Fig. 2 is another block diagram showing some more details of the periphery of the parking ECU 100 in accordance with embodiments of the invention, while omitting the internal structure of the parking ECU 100. In particular, it is shown that the driver profile database 300 includes personalized data 350. The interaction between the parking ECU 100 and the driver 450 is shown by a double-sided arrow. This means that the driver must at least initiate the process for selecting a parking slot and performing an automatic or semi-automatic parking process, as well as that the parking ECU 100 is adapted to output a recommendation to the driver whether to park or not to park the vehicle at a certain location (i.e. whether the respective parking slot is considered eligible or not). However, as indicated by the further arrow between box 100 for the parking ECU and box 550 labeled "Steering and Breaking Information for parking the vehicle in the park slot", the parking ECU 100 can also automatically output the respective information to the vehicle control systems illustrated as 500 in Fig. 1, in addition to or without informing the driver 450. In case information is output to the driver as well, the system may either await a prompt from the driver to proceed as recommended or proceed without a prompt (for instance, if no prompt or instruction to the contrary has been received upon lapse of a certain time interval after outputting the recommendation).

The right-hand side of Fig. 2 shows, as an example of a sensor in the sense of the present invention, a 360° camera 200-1. Further, the figure illustrates a plurality of exemplary pieces of sensor information that can be obtained by the illustrated type of sensor. Such sensor information includes information indicated by road markings 600 such as a wheelchair symbol 600a or a marking indicating a bicycle lane 600b. Further, sensor information that can be obtained by means of the 360° camera 200-1 may include a traffic sign 800 specifying a particular lane as a bus lane. Of course, a bus symbol may alternatively also be indicated as a road marking on the street surface. Finally, 360° camera 200-1 can also measure illumination (brightness) which is indicated by the symbol labeled "light conditions" 700 in Fig. 2.

Needless to say, the examples of sensor information as well as the possible sensors that can be used in the framework of the present invention are not limited to the examples given above. It is only essential for the present invention that both sensor information (600, 700 and 800) obtained by the sensors and forwarded to (received by) the parking ECU 100 and personalized data 350 of the driver are subjected to the joint evaluation as a basis for judgment of the eligibility of a potential parking slot.

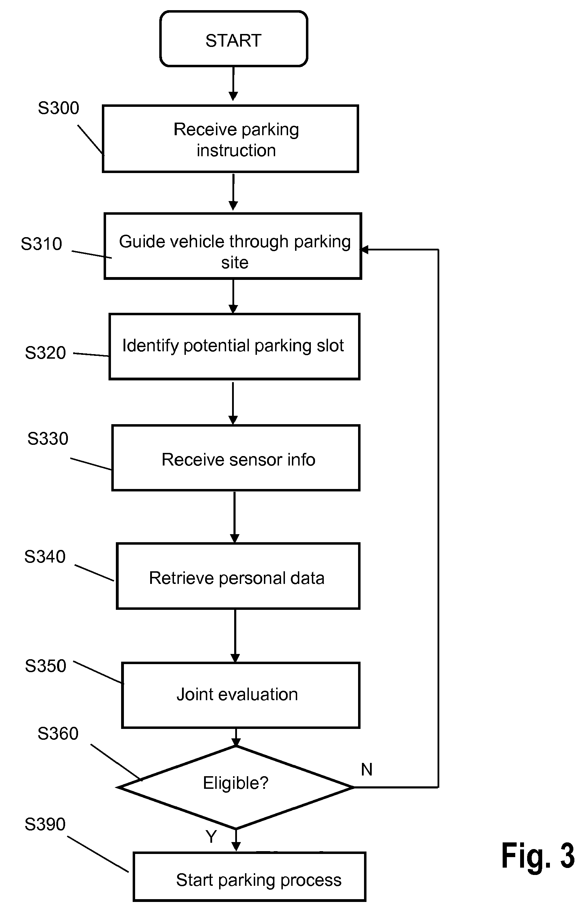

Fig. 3 is a flowchart illustrating a method according to an embodiment of the present invention, wherein a vehicle is automatically guided through a parking lot in order to identify an eligible parking slot. The method starts with the vehicle being placed at a certain position such as an entrance to the parking site and the automatic parking modus being activated by the driver issuing an instruction for automated parking. As indicated above, said instruction may either be issued by the driver still sitting on his seat in the vehicle or by means of a remote control after already having left the car.

In initial step S300, the parking ECU receives the instruction. Accordingly, a process of guiding the vehicle along the parking site is started (S310). At subsequent step S320 a potential parking slot is identified. For instance, a camera mounted on the vehicle realizes that the vehicle, while being guided along the parking site, passes by an empty parking slot.

In said situation, further available sensor information regarding the identified potential parking slot is received by the parking ECU at step S330. At the same time, personalized data of the driver profile of the current driver who has initiated the automated parking mode are retrieved (S340). In subsequent step S350, the joint evaluation of the data obtained by the parking ECU in steps S330 and S340 is performed as described in more detail above. Based on the result of the evaluation, it is judged in step S360 whether the identified potential parking slot is eligible for parking the vehicle or not. If the judgment is affirmative (S360: Y), the automatic parking process is started at step S390. If the judgment is negative (S360: N), the processing returns to step S310 and the vehicle is further guided along the parking site, in order to identify a subsequent potential parking slot.

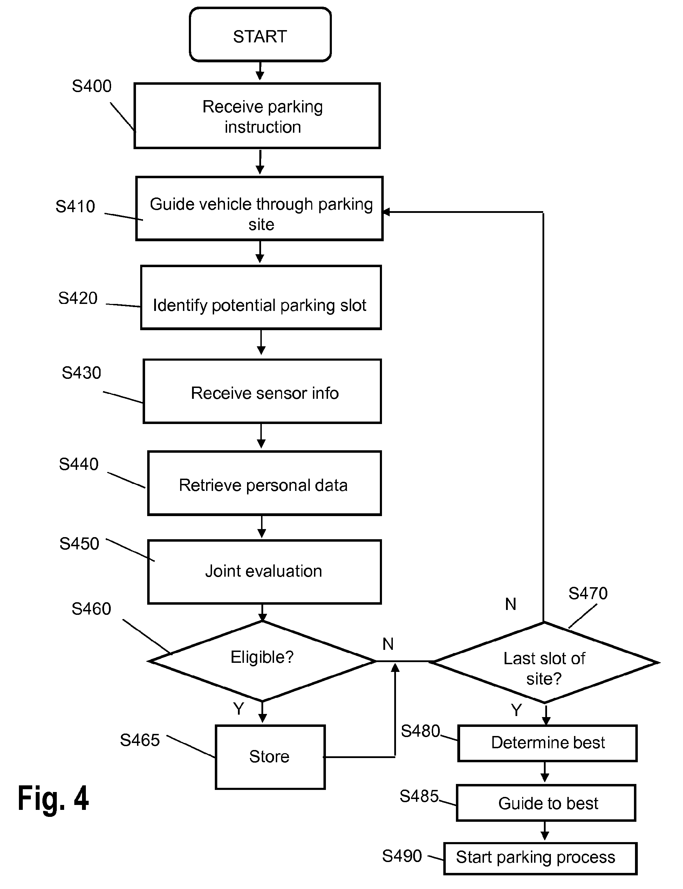

Fig. 4 is a flowchart illustrating a method according to another embodiment of the present invention, wherein a vehicle is also automatically guided through a parking lot but parking is not automatically started when the first eligible parking slot has been found. Rather, according to the method of Fig. 4, the vehicle is first guided along the whole area of a parking site, in order to possibly identify a plurality of eligible parking slots, and then the best one of the eligible parking slots is identified and the vehicle is guided for being parked therein.

In initial steps S400, S410, S420, S430, S440, S450 and S460 the same processing as in the corresponding steps S300, S310, S320, S330, S340, S350 and S360 of Fig. 3 is performed, and the description thereof is therefore omitted.

In case it is judged in step S460 that a potential parking slot is not eligible (S460: N), the processing proceeds to step S470, where it is determined whether or not the whole area of the parking site has been passed by. i.e. whether the current potential parking slot is the last one to be judged for eligibility. In case it is judged in step S460 that a potential parking slot is eligible (S460: Y), location data of said step is at first temporarily stored at step S465 together with the respective sensor information, and the processing subsequently proceeds to step S470.

If, in step S470, it is determined that the whole area of the parking site has not yet been passed by (S470: N), i.e. there may be further potential parking slots to be judged for eligibility, processing returns to step S410, and the vehicle is further automatically guided along the parking site. If, on the other hand, the whole area of the parking site has already been passed by (S470: Y), the processing proceeds to step S480, wherein the most suitable one of all potential parking slots that have been judged as being eligible for the individual driver to park the car is determined. Said determination is made on the basis of the driver profile data, which may include, besides criteria which are considered to be absolutely necessary in order to judge a potential parking slot be eligible, also preferences of the driver which are taken into account to determine a preferred parking slot to be selected for parking the vehicle if there are two or more eligible parking slots. For instance, the driver profile of a handicapped driver may indicate that only a parking slot with a size (measured by respective distance sensors/camera capable of determining distances) equal to or larger than a predetermined minimum size is considered eligible. However, the same driver profile may moreover indicate that more preferably the driver selects a parking slot that is specifically reserved for handicapped people, if available. In this case, a whole area of the parking site is first passed by, in order to determine whether there are any eligible parking slots at all, and subsequently it is determined whether amongst them there is a parking slot that is specifically marked as being reserved for handicapped persons. In case there is still more than one of such parking slots, a further routine is applied such as selecting the largest one of those parking slots as the best one or simply taking the closest one to the current vehicle position or randomly selecting one of those parking slots that have been identified as the best eligible ones.

In subsequent step S485, the vehicle is guided to the best eligible parking slot determined and selected in step S480, and the parking process is started at step S490 in the same manner as in step S390 of Fig. 3.

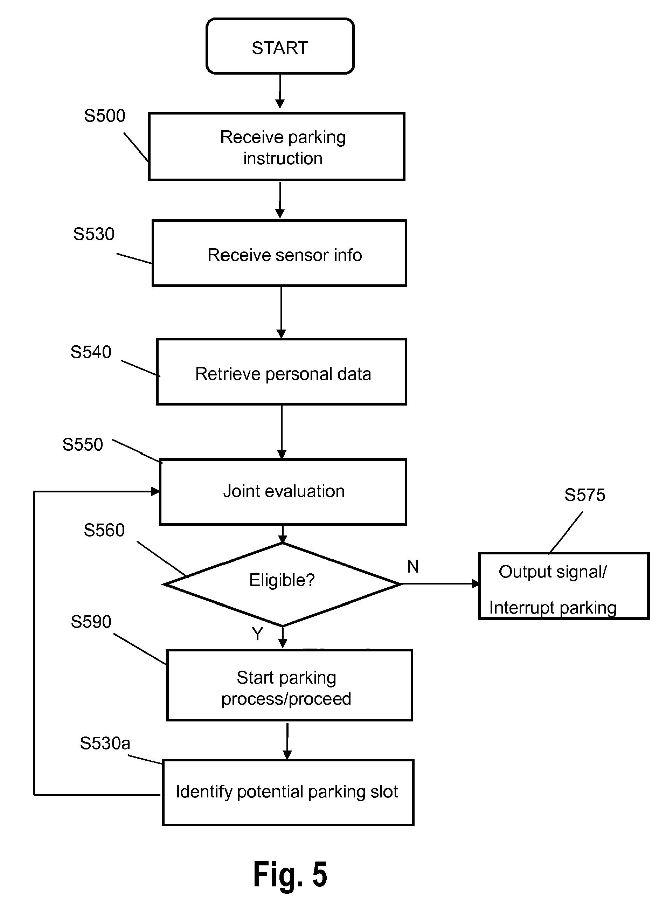

A flowchart illustrating a method according to still another embodiment of the present invention is shown in Fig. 5. In Fig. 5 it is assumed that the vehicle is positioned near a predetermined potential parking slot, before the instruction for automated parking is received by the parking ECU at step S500, i.e. the processing shown by way of illustration in Fig. 5 does not include any search processing to look for a potential parking slot. However, a skilled person is aware that the processing including the further details shown in Fig. 5 is equally applicable also in the framework of a method according to Figs. 3 and 4.

In subsequent steps S530, S540, S550 and S560, the same processing is performed as in the corresponding steps S330, S340, S350 and S360 and S430, S440, S450 and S460 of Figs. 3 and 4, respectively.

If it is judged in step S560 that the potential parking slot is eligible (S560: Y), processing proceeds to step S590, wherein the automated parking process is started in the same manner as in step S390 of Fig. 3. If it is judged in step S560 that the potential parking slot is not eligible (S560: N), processing proceeds to step S575, wherein the respective signal is output to inform the driver and/or to prevent the automated parking instruction from being executed.

However, in accordance with the embodiment of Fig. 5, the collection of sensor data further proceeds after the parking process has started in step S590. In subsequent step S530a, updated sensor information is received by the parking ECU, and the processing returns to step S550, wherein the joint evaluation of the updated sensor information together with the personalized data received before in step S540 is repeated. For instance, the updated sensor information may include further information about traffic signs or road markings that have been recognized by the camera sensor only after the vehicle approaches them during the parking process. Subsequently, processing proceeds to step S560, wherein eligibility is judged again on the basis of an updated result of the joint evaluation, based on the updated sensor information. In view of the updated information, it is not excluded that the judgment which was initially affirmative is now changed, and it is judged that contrary to the initial judgment, the parking slot is actually not eligible (S560:N). In that case, the already started automatic parking process is automatically interrupted at step S575. If, on the other hand, the initial affirmative judgment is confirmed (S560: Y), the already started parking process proceeds (S590).

In accordance with a further particular aspect of the present invention, a parking electronic control unit (ECU) for a vehicle is provided. The parking ECU comprises a first receiving module for receiving a driver's instruction to start a parking process in a parking slot located close to a current position of the vehicle and the second receiving module for receiving sensor information related to the parking slot from at least one sensor device with which the vehicle is equipped. The parking ECU further comprises a judging module for judging whether or not the parking slot is eligible for parking the vehicle based on the received sensor information, starting an automatic or semi-automatic parking process if judged affirmative, and outputting a respective signal indicating that the parking slot is not eligible if judged negative. The parking ECU is further adapted to continue receiving sensor information after starting the automatic or semi-automatic parking process, and to repeat the judgment by the judging module based on any updated received sensor information. In the case of a negative judgment based on the updated sensor information, the already started automatic or semi-automatic parking process is automatically interrupted. In accordance with yet a further particular aspect of the present invention, a respective method performed by a parking electronic control unit according to the foregoing particular aspect is provided.

The present invention as defined by the appended claims is not limited to those particular embodiments that have been described in detail above. The particular features of embodiments described herein can be combined as long as this does not lead to contradictions. A person skilled in the art is aware of further modifications of the described embodiments within the scope of the claims.

In summary, the present invention provides a parking electronic control unit for a vehicle and a respective method that are capable of performing an automated judgment on whether a potential parking slot is eligible for parking the vehicle for an individual driver. The judgment is based on a joint evaluation of sensor data regarding the potential parking slot received from sensors the vehicle is equipped with and personalized data of a driver profile that is pre-stored and retrieved for the evaluation. Thereby, in addition to the objective suitability of the parking slot for parking the vehicle, personal criteria and preferences of an individual driver can also be taken into account for identifying/selecting an eligible parking slot.

## Claims

1. An automated method, performed by a parking electronic control unit (100) of a vehicle, the method comprising the steps of:
receiving (S300; S400; S500) a driver's instruction to start a parking process of the vehicle;
receiving (S330; S430; S530) sensor information (600a, 600b, 700, 800) related to a potential parking slot located close to a current position of the vehicle, from at least one sensor device (200, 200-1) with which the vehicle is equipped;
retrieving (S340; S440; S540), from a storage (300) storing therein a driver profile of said driver (450), personalized data (350) belonging to said driver profile;
performing a joint evaluation (S350; S450; S550) of said received sensor information (600a, 600b, 700, 800) and said retrieved personalized data (350); and
judging (S360; S460; S560) whether or not the potential parking slot is eligible for the driver (450) to park the vehicle, based on said joint evaluation (S350; S450; S550).

2. A method according to claim 1, further comprising the step of outputting a signal indicating that the potential parking slot is not eligible, if it is judged in said judging step (S360; S460; S560) that the potential parking slot is not eligible.

3. A method according to claim 1 or 2, wherein no parking process is started despite said driver's instruction, if it is judged in said judging step (S360; S460; S560) that the potential parking slot is not eligible.

4. A method according to any of claims 1 to 3, further comprising the step of starting (S390; S490; S590) an autonomous or semi-autonomous parking process, if it is judged in said judging step (S360; S460; S560) that the potential parking slot is eligible.

5. A method according to any of claim 4, wherein
said step (S530) of receiving sensor information is repeated (S530a) for receiving updated sensor information (600a, 600b, 700, 800) and said step (S550) of performing a joint evaluation and said judging step (S560) are repeatedly performed based on the updated sensor information, after said step (S590) of starting a parking process, and
said started parking process is automatically interrupted (S575) if said repeated judging step (S560) judges, based on the updated sensor information (600a, 600b, 700, 800) and the personalized data (350), that the potential parking slot is not eligible.

6. A method according to any of claims 1 to 5, wherein the received sensor information includes traffic sign (800) and/ or road marking (600a, 600b) recognition information.

7. A method according to any of claims 1 to 6, wherein the received sensor information includes brightness information (700) of the location of the potential parking slot.

8. A method according to any of claims 1 to 7, wherein the personalized data (350) include criteria for determining whether or not to select a potential parking slot as a parking slot, in accordance with predetermined personal preferences of the driver (450).

9. A method according to claim 8, wherein
the personalized data (350) include a minimum brightness level required by the driver (450) to select the potential parking slot, and
said joint evaluation (S350; S450; S550) includes comparing said minimum brightness level with brightness data (700) of the location of the potential parking slot included in the received sensor information.

10. A method according to claim 8 or 9, wherein
the personalized data (350) include information defining whether or not the driver (450) accepts a potential parking slot having a certain road marking (600a, 600b) or traffic sign (800), and
said joint evaluation (S350; S450; S550) includes determining whether the received sensor information indicates the presence of the certain road marking (600a, 600b) or traffic sign (800) at the potential parking slot.

11. A method according to any of claims 1 to 10, further comprising the step of controlling (S310; S410) the vehicle to be automatically guided along a parking site having a plurality of potential parking slots, in order to look for and identify an eligible parking slot.

12. A method according to claim 11, further comprising the step of selecting (S390) the first eligible potential parking slot that is passed by the vehicle while being automatically guided for parking the vehicle.

13. A method according to claim 11, further comprising the steps of
temporarily storing (S465) location information of each potential parking slot passed by while being automatically guided that is judged to be eligible for the driver (450),
evaluating plural eligible parking slots against each other in order to determine (S480) a parking slot that matches predetermined criteria included in the personalized data (350) best, and
recommending the best matching parking slot to the driver and/or automatically guiding (S485) the vehicle to said best matching parking slot and starting (S490) the parking process at the location of the best matching parking slot.

14. A parking electronic control unit for a vehicle for controlling an autonomous or semi-autonomous parking process of the vehicle, said parking electronic control unit comprising
a first receiving module (110) for receiving a driver's instruction to start a parking process of the vehicle;
a second receiving module (120) for receiving sensor information (600a, 600b, 700, 800) related to a potential parking slot located close to a current position of the vehicle, from at least one sensor device (200, 200-1) with which the vehicle is equipped;
a data retrieving module (130) for retrieving, from a storage storing therein a driver profile of said driver, personalized data (350) belonging to said driver profile;
an evaluation module (140) for performing a joint evaluation of said received sensor information (600a, 600b, 700, 800) and said retrieved personalized data (350); and
a judging module (150) for judging whether or not the potential parking slot is eligible for the driver (450) to park the vehicle, based on said joint evaluation.

15. A vehicle comprising a parking electronic control unit (100) according to claim 14.
